Europäisches Patentamt

European Patent Office

Office européen des brevets

(11) Publication number: **0 008 817**
A1

# EUROPEAN PATENT APPLICATION

(21) Application number: 79200407.9

(22) Date of filing: 18.07.79

(51) Int. Cl.³: **H 02 B 13/02**
**H 02 B 1/18**

(30) Priority: 21.08.78 NL 7808616

(43) Date of publication of application:
19.03.80 Bulletin 80/6

(84) Designated Contracting States:
BE CH DE FR GB IT NL SE

(71) Applicant: Coq B.V.
No.72, Kanaalweg
NL-3527 KX Utrecht(NL)

(72) Inventor: Boersma, Rintje
No.21, Kerkweg
Harmelen(NL)

(74) Representative: Hoijtink, Reinoud et al,
Sweelinckplein 1
NL-2517 GK The Hague(NL)

(54) Metal clad three phase switchgear.

(57) Metal clad three phase switchgear the casing of which accommodates not only the ordinary conductors for the respective phases of the switchgear but also a terminal conductor (29) leading through a wall of the casing to the outside and a switch (11), by means of which each phase conductor (12, 13, 14) can be individually connected for test purposes with said terminal conductor either directly or through a test transformer (9), if used.

FIG.3

EP 0 008 817 A1

Croydon Printing Company Ltd.

0008817

-1-

The invention relats to metal clad three phase switchgear comprising conductors for the respective phases and a casing protectively surrounding said conductors. Switchgear of this kind has to be tested now and then, for instance during its manufacture, during its erection in a switching station and during operation. To this end a voltage difference is set up by means of a test transformer. Up to now it was usual to transport for that purpose a separate test transformer to the test site and to connect said transformer by means of conductors to terminal means which are connected with the conductors of the switchgear. Before the transformer is connected the insulating fluid, say $SF_6$ gas, is discharged from the part of the switchgear in question . After the connection thereof has been completed, the said part of the switchgear is again filled with gas. It will be obvious that after the tests have been carried out, the gas must be discharged again, the transformer must be disconnected and removed and the switchgear must be once more filled with gas.

It will be clear that this method requires a

-2-

lot of time and is expensive.

The invention has the object to provide a solution for this disadvantage. According to the invention, this is achieved in that extending to the outside through a wall of the casing is a terminal conductor and contained in the casing is a switch for the optional connection of a phase conductor to said terminal conductor. Owing to the measures taken in accordance with the invention the test transformer can be directly connected to the terminal means led to the outside and by means of the switch each time one of the conductors of the switchgear can be put under tension. Instead of a transformer for high voltages, a generator of surge voltages or a direct current generator may be connected.

According to a preferred embodiment the switch is connected to said outgoing terminal conductor through a test transformer. In that embodiment the test transformer is contained in the gas system of the switchgear and forms permanently part thereof. For such switchgear a test transformer for the three phases is required. The advantage is that the expensive assembly and disassembly work can be avoided and for the tests only the connection of a measuring transformer and instruments belonging thereto suffices. Moreover, no additional space for the erection of a bulky test transformer in the switching station is required. An other advantage is that the tests can be carried out entirely under operational conditions, since in the gas system no changes occur for the purpose of the tests. Except for the possibility to connect the switch with each one of the three phase conductors the switch may be provided with means for its connection to earth and it may have an off-position. When the switch is in its off-position the transformer itself may be tested. If it is preferred to separate the insulating fluid of the transformer from that of the switchgear the transformer may be accommodated in a compartment of the casing, in which the gas system is separated from that of the switchgear.

The test transformer may be mounted for rotation and the movable switching contact of the switch may then be rigidly attached to the test transformer. In this embodiment the rotatable test transformer is actually at the same time the rotatable part of the switch.

It will be apparent that also in single phase switchgear a test transformer may be permanently mounted within the casing which protectively encloses the conductor.

The invention will be elucidated with the aid of illustrated embodiments. In the drawings:

Figure 1 shows diagrammatically the use of the test transformer in three phase switchgear;

Figure 2 illustrates the provision of the switch within the casing or the envelope of switchgear according to the invention;

Figure 3 is an embodiment of the invention, in which the test transformer is provided in the gas system of the switchgear;

Figure 4 shows an embodiment, in which the gas system of the test transformer is separated from that of the switchgear and

Figure 5 illustrates an embodiment, in which at the same time the measuring unit is shown.

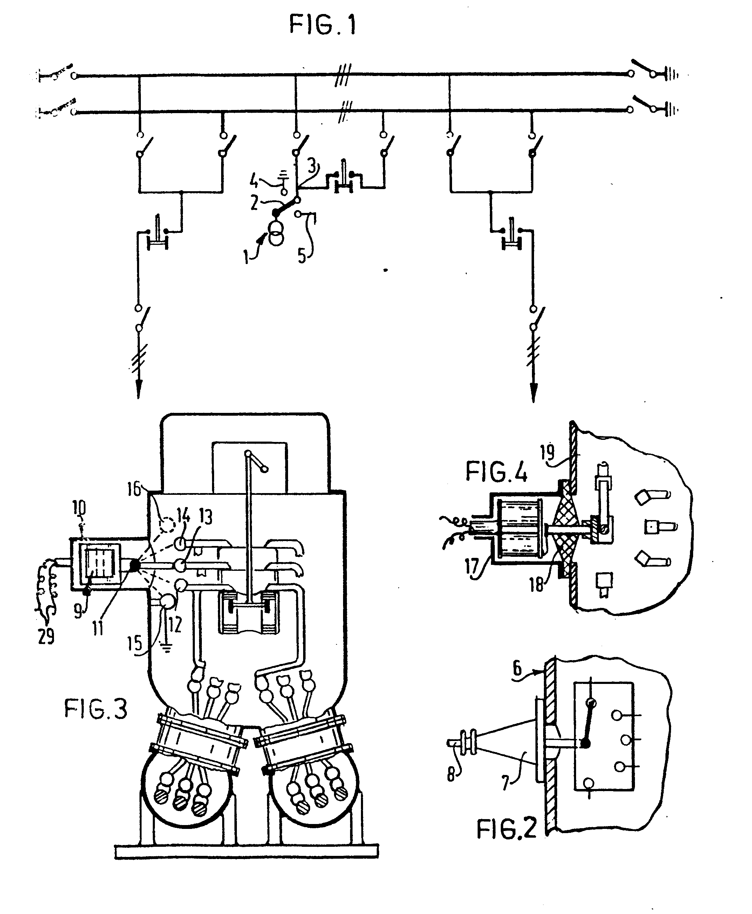

Figure 1 shows switchgear comprising double busbars, in which the test transformer 1 is adapted to be connected to the unit used for the interconnection of the busbars. The movable contact member 2 is provided for connection with one of the three phase conductors 3 as well as for the connection, in a position 4, to earth and for its turning into a position 5, in which the movable member 2 is disconnected. The other switching elements of the switchgear shown in figure 1 are provided in the usual places and will not be discussed.

Figure 2 illustrates the provision of the switch within the envelope or the casing 6 of the switchgear. By means of a gas tight bushing insulator 7 a terminal 8 is obtained outside the switchgear. A test transformer to put the conductors of the switchgear under tension, a generator of surge voltages or a direct current generator may be connected to the terminal 8.

In the embodiment shown in figure 3 the test transformer 9 is accommodated in a projecting part 10 of the envelope or the casing of the switchgear. By means of the five-positions-switch 11 the test transformer can be connected with the three phase conductors 12,13,14, with earth 15 and put in the off-position 16. The test transformer 9 is mounted in the gas system of the switch gear. A supplying source of low voltage may be connected to the terminal 29 which is provided on the outside.

Figure 4 shows an embodiment in which the gas system within the projecting compartment 17 is separated by a gas-tight bushing insulator 18 from the gas system 19 of the switchgear. Both in the embodiment shown in Figure 3 and that illustrated in Figure 4 the test transformer forms permanently a part of the switchgear and it may , at any moment, be connected to one of the conductors of the switchgear by means of the switch when a test is required.

As is shown in Figure 4 the test transformer may be so mounted for rotation, as to connect itself with a conductor by its rotation.

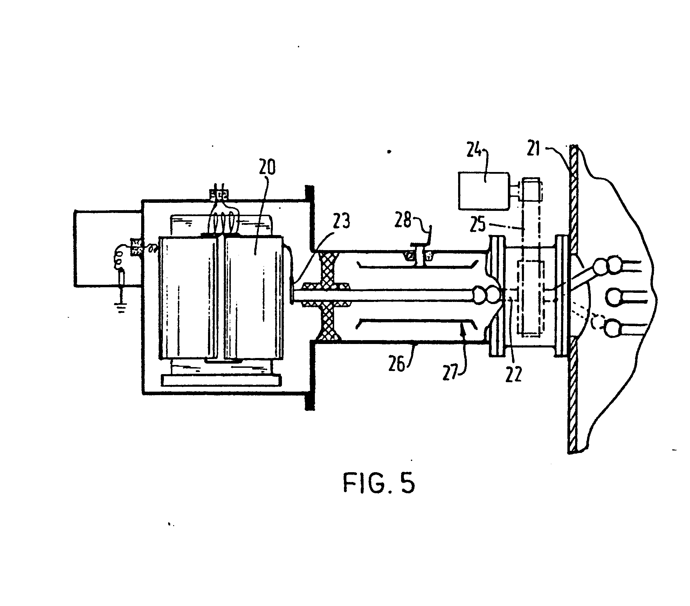

In Figure 5 the test transformer 20 forms also permanently a part of the switch gear 21. By means of the switch 22 the terminal 23 of the transformer may be connected to one of the conductors. The switch is operated by a motor 24 and the transmission unit 25. The measuring unit 26 is provided with an electrode 27 which is capacitively coupled with the outgoing high tension conductor and with means 28 leading to the outside for measuring purposes.

-1-

CLAIMS

1. Metal clad three phase switchgear comprising conductors for the respective phases and a casing protectively surrounding said conductors, characterized in that extending to the outside, through a wall of the casing is a terminal conductor and contained in the casing is a switch for the optional connection of a phase conductor to said terminal conductor.

2. Switchgear according to claim 1, characterized in that the switch is connected to said terminal conductor through a test transformer.

3. Switchgear according to claim 1-2, characterized in that the switch is adapted to be connected to earth.

4. Switchgear according to claims 1-3, characterized in that the switch has an off-position.

5. Switchgear according to claim 2, characterized in that the test transformer is accomodated in a compartment of the casing, in which the gas system is separated from that of the switchgear.

6. Switchgear according to claim 1-2,

-2-

characterized in that the test transformer is mounted for rotation and the movable contact member of the switch is rigidly attached to the test transformer.

7. Switchgear according to claim 1, characterized in that the terminal conductor extends through a bushing insulator.

8. Switchgear according to claims 1,2,5 and 6, characterized in that the terminal conductor is a conductor for low voltages.

0008817

FIG.1

FIG.4

19

17

18

FIG.3

16

10

14 13

9

11

29

15

12

FIG.2

6

8

7

4 3

2

1

5

FIG. 5

European Patent Office

**EUROPEAN SEARCH REPORT**

Application number

EP 79 20 0407

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | DE - A - 2 628 453 (SIEMENS AG) <br> * Pages 6-8 * <br><br> -- | 1,7 | H 02 B 13/02 <br> 1/18 |
| | FR - A - 2 346 884 (MERLIN-GERIN) <br> * Claims 5-9 * <br><br> -- | 1,3,5 | |
| | GB - A - 476 742 (REYROLLE) <br> * Page 11, lines 29-65; <br> figure 1 * <br><br> ---- | 1,2,7 | TECHNICAL FIELDS SEARCHED (Int.Cl. 3) <br><br> H 02 B 13/02 <br> 1/18 <br> H 01 H 33/02 |
| | | | CATEGORY OF CITED DOCUMENTS <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |

The present search report has been drawn up for all claims

| Place of search | Date of completion of the search | Examiner |
|---|---|---|
| The Hague | 16-11-1979 | DAILLOUX |

EPO Form 1503.1  06.78